# EUROPEAN PATENT SPECIFICATION

(11) **EP 1 360 894 B1**
(45) Date of publication and mention of the grant of the patent: **27.07.2005**
(21) Application number: 03077518.3
(22) Date of filing: 16.05.2000
(51) Int. Cl.: A01J 5/007, A01J 5/08

(54) **An implement for milking animals, such as cows**
Gerät zum Melken von Tieren, wie zum Beispiel Kühen
Dispositif de traite d'animaux, comme par exemple des vaches

(30) Priority: 07.07.1999 NL 1012529
(43) Date of publication of application: 12.11.2003
(62) Divisional of application: 00929952.0
(73) Proprietor: Lely Enterprises AG, 6300 ZUG (CH)
(72) Inventor: van den Berg, Karel, 2971 BR Bleskensgraaf (NL)
(74) Representative: Corten, Maurice Jean F.M.

(56) References cited:
- EP-A- 0 534 564
- EP-A- 0 645 079
- WO-A-93/13651
- WO-A-96/36212
- NL-C- 1 007 266

## Description

The invention relates to an implement for milking animals, such as cows, comprising a milking machine with teat cups and at least one sensor for supervising the milking process and/or examining the milk obtained and/or examining the physical condition of the animal, which implement is also provided with a processing unit for processing the signal supplied by the sensor, said signal being transmitted via a wireless connection to a receiver which is connected to the processing unit.

Such an implement is known from the Dutch patent 1 007 266.

In the known implement the sensor is disposed in the milk line. This has the disadvantage that it is not possible to make the sensor come into contact with the animal, while, moreover, it takes some time before the sensor comes into contact with the milk and is capable of carrying out measurements.

The invention aims at providing an implement in which the above-mentioned drawbacks do not occur or are at least limited to a considerable extent.

In accordance with the invention this is achieved by an implement according to claim 1. Disposing the sensor in and/or on the teat cup makes it possible to collect data regarding the quality of the milking process and/or the quality of the milk and/or the physical condition of the animal immediately after the milk flow has started and/or after the teat cup has been connected to the teat.

It will be obvious that the sensor and/or the teat cup may also be provided with a processing unit. In such a case the processing unit, which is connected to the receiver, will comprise e.g. a printer and/or a display.

According to again another inventive feature, the processing unit is connected to a transmitter with the aid of which a signal is transmitted to the sensor in a wireless manner.

In accordance with an inventive feature, the wireless connection comprises a transmitter which is disposed on and/or in the milking machine. According to another aspect of the invention, the transmitter is disposed near the lower side of the teat cup. According to again another inventive feature, the transmitter is constituted by an infrared transmitter or an ultrasonic or a radiographic or an optical transmitter. For the purpose of supplying the transmitter with energy, the transmitter is connected to an energy source which, according to an inventive feature, is also charged by a wireless connection. This connection has the same advantages as the wireless connection of the sensor. According to an inventive feature, more in particular, the wireless connection is achieved by means of an electromagnetic field. In an embodiment of the invention, the wireless connection is constituted by two coils. According to a further aspect of the invention, the coils constitute a transmitter and/or a receiver for the wireless connection. It is further possible to charge the energy source with the aid of solar cells.

According to another inventive feature, the transmitter is connected, directly or indirectly, via an energy source, to a device for generating electrical energy, whereby, as a result of changes in air pressure or gas pressure, a body, e.g. a magnet, is set in motion, and, using said motion, electrical energy is generated in an electromagnetic manner.

According to a further inventive feature, the body is disposed in a pulsation chamber and/or a milk chamber of the teat cup.

According to another inventive feature, the body is connected directly or indirectly to a liner of the teat cup.

According to a further inventive feature, the lower part of the teat cup is tapering, while the implement also comprises a carrier having a recess which corresponds to the tapering lower side of the teat cup. In the inoperative position, the teat cup is retained on the carrier with the aid of a withdrawal member. The withdrawal member comprises a cord which has one end connected to the lower side of the teat cup and the other end to a control cylinder.

For the purpose of facilitating reading of the signals received by the sensor, according to an inventive feature, the receiver of the wireless connection is disposed in the vicinity of the transmitter. According to another inventive feature, the receiver is disposed in or on the carrier of the teat cup.

In accordance with an inventive feature, by means of the sensor is/are measured: the temperature of the milk and/or the conductivity of the milk and/or the cell count and/or the germ count of the milk and/or the presence or absence of the teat in the teat cup and/or the vacuum level in the teat cup and/or the blood pressure of the animal and/or the heart beat of the animal and/or the internal pressure in the teat and/or the movements of the liner of the teat cup. It will be obvious, however, that the above-mentioned enumeration is not restrictive.

According to an inventive feature, a mass inertia sensor is disposed in and/or on the teat cup.

In accordance with an inventive feature, the signal supplied by the mass inertia sensor is transmitted to a processing unit in a wireless manner and/or via a fixed connection, such as e.g. an electric wire or an optical fibre, or via contact surfaces.

According to a further inventive feature, if there is established by means of the mass inertia sensor that a teat cup has fallen from a teat, the processing unit emits a signal, so that the vacuum in the teat cup is removed.

According to again another inventive feature, if there is established by means of the mass inertia sensor that a teat cup has fallen from a teat, the processing unit emits a signal, in order that the relevant teat cup is automatically connected to the teat.

According to a further inventive feature, the implement comprises a milking robot with a robot arm with the aid of which the teat cups are automatically connected to the teats of the animal to be milked. According to again another aspect of the invention, the processing unit comprises a computer.

The invention will now be explained in further detail with reference to the accompanying drawings in which:
Figure 1 shows part of a milking robot arm with a teat cup that is provided with sensors which are connected to a transmitter which is capable of exchanging data with a receiver via a wireless connection;
Figure 2 shows a second embodiment of a wireless connection, and
Figure 3 shows a teat cup with a mass inertia sensor.

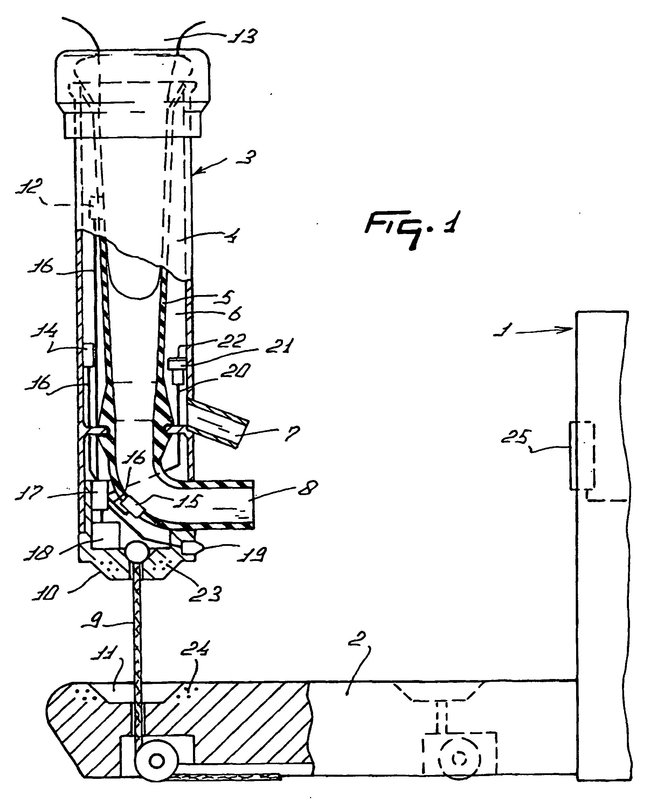

Figure 1 shows part of a robot arm construction 1 of a (non-shown) milking robot. The robot arm construction 1 comprises a carrier 2 for carrying teat cups 3. In the exemplary embodiment only one teat cup 3 is depicted. However, it will be obvious that, depending on the kind of animal which is being milked, two or more teat cups may be carried by the carrier 2. The teat cup 3 comprises an outer casing 4 and a flexible liner 5. Between the outer casing 4 and the teat cup liner 5 there is located a pulsation chamber 6 in which a vacuum and an atmospheric pressure are alternately applied. A pulse tube 7 is connected to the pulsation chamber 6. Near the lower side of the teat cup 3 there is further connected a milk tube 8 to the teat cup 3. By means of a cord 9, which has one side connected to the teat cup 3 and the other side to a (non-shown) control cylinder, the teat cup 3 can be drawn against the carrier 2. Near its lower side the teat cup 3 has a tapering part 10, while the carrier 2 has a tapering recess 11. When the teat cup 3 is drawn onto the carrier 2 by means of the cord 9, the teat cup 3 is brought into a predetermined position as a result of the tapering parts 10 and 11. Near the upper side of the teat cup liner 5 there is disposed a first sensor 12 with the aid of which there can be checked whether the teat cup 3 is connected to a teat 13. The first sensor 12 may be designed as a temperature sensor. In the pulsation chamber 6 there is further included a second sensor 14 with the aid of which the vacuum level in the pulsation chamber 6 can be determined. Near the lower side of the teat cup liner 5 there is further included a third sensor 15 with the aid of which the conductivity of the milk obtained is determined. The first, second and third sensors 12; 14; 15 are connected to a transmitter 17 via wires 16. The transmitter 17 is fed by an accumulator 18. The transmitter 17 is further provided with a transmitter element 19 which is disposed near the lower side of the teat cup 3. The transmitter and the accumulator and the transmitter element 17; 18; 19 are embedded in the material of which the lower side of the teat cup 3 is made. This has the advantage that the transmitter 17 and the accumulator 18 and the transmitter element 19 are less vulnerable. Via a wire 20 the transmitter 17 is further connected to a device 21 for generating energy. As a result of the alternating difference in pressure in the pulsation chamber 6, the device 21 is capable of generating electrical energy. For that purpose the device 21 comprises a membrane 22 which is reciprocated under the influence of the alternating difference in pressure. To the membrane 22 there is connected a (non-shown) magnet which is moved in a (non-shown) coil. In the lower, tapering part 10 of the teat cup 3 there is further embedded a first coil 23 which is in connection with the accumulator 18. Around a tapering recess 11 in the carrier 2 there is disposed a second coil 24 which is connected to a (non-shown) energy source. When the teat cup 3 is drawn onto the carrier 2, the accumulator 18 can be charged in a wireless manner via the coils 23 and 24. The robot arm construction 1 is further provided with a receiver 25 which is in connection with a (non-shown) processing unit. During and/or after milking, measurement data measured by the sensors are transmitted to the receiver 25 in a wireless manner via the transmitter element 19. Thus the supervision of the milking process and/or the examination of the milk obtained and/or the examination of the physical condition of the animal is/are effected in a proper manner.

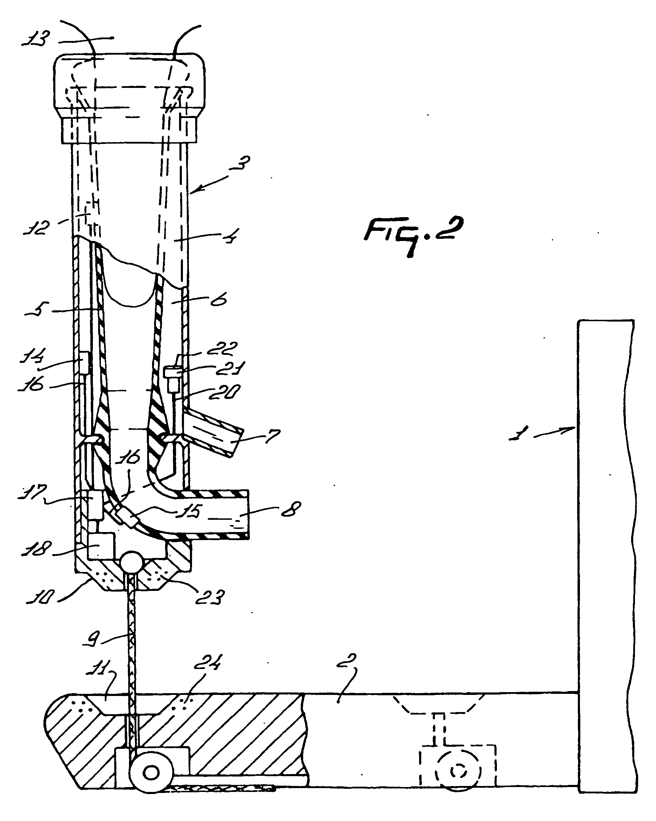

Figure 2 shows a second embodiment of the invention, in which parts corresponding to those of the first embodiment are indicated by the same reference numerals. In the second embodiment of the invention, the wireless connection is constituted by the first and second coils 23; 24. The two coils 23; 24 can be used both as transmitters and as receivers.

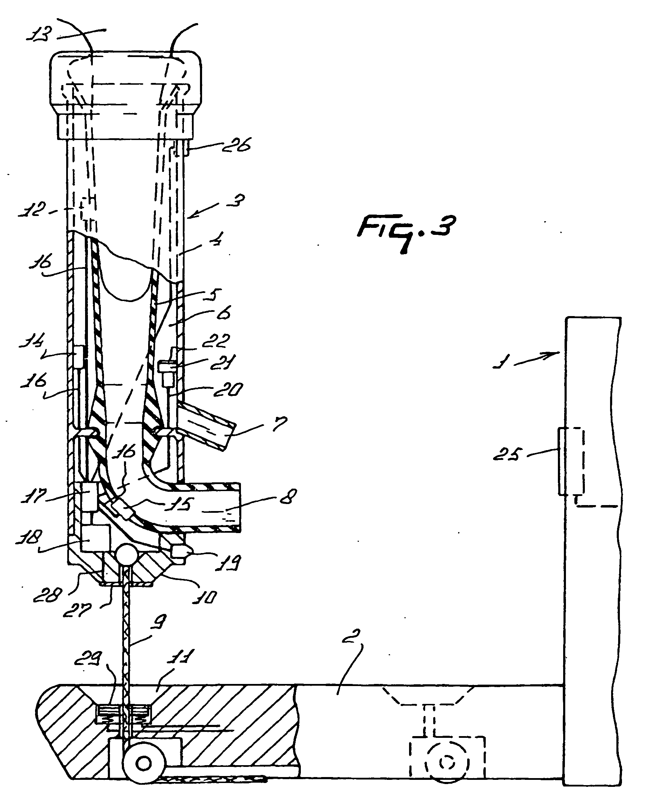

Figure 3 shows a third embodiment of the invention, in which the teat cup 3 is provided with a mass inertia sensor 26 with the aid of which there is established whether the teat cup 3 falls from the teat 13. If there is established that the teat cup 3 has fallen from the teat 13, the vacuum in the teat cup 3 is removed and the teat cup is drawn onto the carrier 2 by means of the cord 9, whereupon the teat cup 3 is connected again to the teat 13 by means of the robot arm construction 1. The lower side of the teat cup 3 shown in Figure 3 is further provided with a first contact surface 27 which is connected to the accumulator 18 via a wire 28. The first contact surface 27 makes contact with a second contact surface 29 which is disposed on the carrier 2. The first and second contact surfaces 27; 29 form part of a not completely shown battery charger for the accumulator 18. For the purpose of achieving a proper contact between the first and second contact surfaces 27; 29, the second contact surface is designed as a resilient one. However, it will be obvious that also the first contact surface 27 and/or the two contact surfaces 27; 29 may be designed as resilient ones.

## Claims

1. An implement for milking animals, such as cows, comprising a milking machine with teat cups (3), at least one sensor (12; 14; 15) for examining the milk obtained, said sensor (12; 14; 15) being disposed in and/or on the teat cup (3), and a robot arm construction (1) comprising a carrier (2) for carrying teat cups, which implement is also provided with a processing unit for processing the signal supplied by the sensor (12; 14; 15), **characterized in that** said signal being transmitted via a wireless connection from a transmitter (17, 23, 24) to a receiver (25) which is connected to the processing unit, said transmitter (17, 23, 24) being connected to an accumulator (18), said implement comprising a first coil (23) being embedded in the lower part (10) of the teat cup (3), and a second coil (24) being disposed around a tapering recess (11) in the carrier (2), said second coil (24) being connected to an energy source, for charging the accumulator (18) when the teat cup (3) is drawn onto the carrier (2) in a wireless manner via the coils (23, 24).

2. An implement as claimed in claim 1, **characterized in that** the coils (23; 24) constitute a transmitter and/or a receiver of the wireless connection.

3. An implement as claimed in claim 1 or 2, **characterized in that** said transmitter (17) is further provided with a transmitter element (19) which is disposed near the lower side of the teat cup (3).

4. An implement as claimed in claim 3, **characterized in that** the transmitter (17), the accumulator (18) and the transmitter element (19) are embedded in the material of which the lower side of the teat cup (3) is made.

5. An implement as claimed in any one of the preceding claims, **characterized in that** the sensor is suitable for supervising the milking process.

6. An implement as claimed in any one of the preceding claims, **characterized in that** the sensor is suitable for examining the physical condition of the animal.

7. An implement as claimed in any one of the preceding claims, **characterized in that** the transmitter (17) is constituted by an infrared transmitter.

8. An implement as claimed in any one of claims 1 to 6, **characterized in that** the transmitter (17) is constituted by an ultrasonic transmitter.

9. An implement as claimed in any one of claims 1 to 6, **characterized in that** the transmitter (17) is constituted by a radiographic transmitter.

10. An implement as claimed in any one of claims 1 to 6, **characterized in that** the transmitter (17) is constituted by an optical transmitter.

11. An implement as claimed in any one of the preceding claims, **characterized in that** the teat cup (3) has a tapering lower part (10).

12. An implement as claimed in any one of the preceding claims, **characterized in that** the receiver (25) is disposed in the vicinity of the transmitter (17).

13. An implement as claimed in claim 12, **characterized in that** the receiver (25) and/or the transmitter (17) is/are disposed in or on the carrier (2) of the teat cup (3).

14. An implement as claimed in any one of the preceding claims, **characterized in that** by means of the sensor (12; 14; 15) is/are measured: the temperature of the milk and/or the conductivity of the milk and/or the cell count and/or the germ count of the milk and/or the presence or absence of the teat (13) in the teat cup (3) and/or the vacuum level in the teat cup (3) and/or the blood pressure of the animal and/or the heart beat of the animal and/or the internal pressure in the teat (13) and/or the movements of the liner (5) of the teat cup (3).

15. An implement as claimed in any one of the preceding claims, **characterized in that** a mass inertia sensor (26) is disposed in and/or on the teat cup (3).

## Patentansprüche

1. Vorrichtung zum Melken von Tieren, wie z. B. Kühen, die eine Melkmaschine mit Zitzenbechern (3), mindestens einen Sensor (12; 14; 15) zum Untersuchen der gewonnenen Milch, wobei der Sensor (12; 14; 15) in und/oder an dem Zitzenbecher (3) angeordnet ist, und eine Roboterarm-Konstruktion (1) mit einem Träger (2) zum Tragen von Zitzenbechern umfaßt, wobei die Vorrichtung auch mit einer Verarbeitungseinheit zum Verarbeiten des von dem Sensor (12; 14; 15) gelieferten Signals versehen ist,
**dadurch gekennzeichnet, daß** das Signal über eine drahtlose Verbindung von einem Sender (17, 23, 24) zu einem Empfänger (25) übertragen wird, der mit der Verarbeitungseinheit verbunden ist, wobei der Sender (17, 23, 24) mit einem Akku (18) verbunden ist, wobei die Vorrichtung eine erste Spule (23), die in den unteren Teil (10) des Zitzenbechers (3) eingebettet ist, und eine zweite Spule (24) umfaßt, die eine verjüngte Ausnehmung (11) in dem Träger (2) umgibt, wobei die zweite Spule (24) mit einer Stromquelle verbunden ist, um den Akku (18) aufzuladen, wenn der Zitzenbecher (3) über die Spulen (23, 24) drahtlos auf den Träger (2) gezogen wird.

2. Vorrichtung nach Anspruch 1,
**dadurch gekennzeichnet, daß** die Spulen (23; 24) einen Sender und/oder einen Empfänger der drahtlosen Verbindung bilden.

3. Vorrichtung nach Anspruch 1 oder 2,
**dadurch gekennzeichnet, daß** der Sender (17) ferner mit einem Sendeelement (19) versehen ist, das nahe der Unterseite des Zitzenbechers (3) angeordnet ist.

4. Vorrichtung nach Anspruch 3,
**dadurch gekennzeichnet, daß** der Sender (17), der Akku (18) und das Sendeelement (19) in das Material eingebettet sind, das die Unterseite des Zitzenbechers (3) bildet.

5. Vorrichtung nach einem der vorhergehenden Ansprüche, **dadurch gekennzeichnet, daß** der Sensor zur Überwachung des Melkvorganges geeignet ist.

6. Vorrichtung nach einem der vorhergehenden Ansprüche, **dadurch gekennzeichnet, daß** der Sensor zum Überprüfen der physischen Verfassung des Tieres geeignet ist.

7. Vorrichtung nach einem der vorhergehenden Ansprüche, **dadurch gekennzeichnet, daß** der Sender (17) durch einen Infrarotsender gebildet ist.

8. Vorrichtung nach einem der Ansprüche 1 bis 6,
**dadurch gekennzeichnet, daß** der Sender (17) durch einen Ultraschallsensor gebildet ist.

9. Vorrichtung nach einem der Ansprüche 1 bis 6,
**dadurch gekennzeichnet, daß** der Sender (17) durch einen Funksender gebildet ist.

10. Vorrichtung nach einem der Ansprüche 1 bis 6,
**dadurch gekennzeichnet, daß** der Sender (17) durch einen optischen Sender gebildet ist.

11. Vorrichtung nach einem der vorhergehenden Ansprüche,
**dadurch gekennzeichnet, daß** der Zitzenbecher (3) einen verjüngten unteren Teil (10) aufweist.

12. Vorrichtung nach einem der vorhergehenden Ansprüche,
**dadurch gekennzeichnet, daß** der Empfänger (25) in der Nähe des Senders (17) angeordnet ist.

13. Vorrichtung nach Anspruch 12,
**dadurch gekennzeichnet, daß** der Empfänger (25) und/oder der Sender (17) in oder an dem Träger (2) des Zitzenbechers (3) angeordnet sind/ist.

14. Vorrichtung nach einem der vorhergehenden Ansprüche,
**dadurch gekennzeichnet, daß** mittels des Sensors (12; 14; 15) gemessen wird/werden: die Temperatur der Milch und/oder die Leitfähigkeit der Milch und/oder die Zellzahl und/oder der Keimgehalt der Milch und/oder das Vorhandensein oder Nichtvorhandensein der Zitze (13) in dem Zitzenbecher (3) und/oder der Evakuierungsgrad des Zitzenbechers (3) und/oder der Blutdruck des Tieres und/oder die Herzfrequenz des Tieres und/oder der interne Druck in der Zitze (13) und/oder die Bewegungen der Auskleidung (5) des Zitzenbechers (3).

15. Vorrichtung nach einem der vorhergehenden Ansprüche,
**dadurch gekennzeichnet, daß** ein Trägheitsaensor (26) in und/oder an dem Zitzenbecher (3) angeordnet ist.

## Revendications

1. Dispositif de traite d'animaux, comme par exemple des vaches, comprenant une machine à traire avec des gobelets trayeurs (3), au moins un capteur (12 ; 14 ; 15) pour examiner le lait obtenu, ledit capteur (12 ; 14 ; 15) étant disposé dans et/ou sur le gobelet trayeur (3), et une structure formant bras robotisé (1) comprenant un élément porteur (2) destiné à porter les gobelets trayeurs, lequel dispositif est également équipé d'une unité de traitement destinée à traiter le signal fourni par le capteur (12 ; 14 ; 15), **caractérisé en ce que** ledit signal est transmis par une connexion sans fil depuis un émetteur (17, 23, 24) à un récepteur (25) connecté à l'unité de traitement, ledit émetteur (17, 23, 24) étant connecté à un accumulateur (18), ledit dispositif comprenant une première bobine (23) encastrée dans la partie inférieure (10) du gobelet trayeur (3), et une seconde bobine (24) disposée autour d'un évidement conique (11) dans l'élément porteur (2), ladite seconde bobine (24) étant connectée à une source d'énergie, pour charger l'accumulateur (18) via les bobines (23, 24) lorsque le gobelet trayeur (3) est tiré sur l'élément porteur (2) sans fil.

2. Dispositif selon la revendication 1, **caractérisé en ce que** les bobines (23 ; 24) constituent un émetteur et/ou un récepteur de la connexion sans fil.

3. Dispositif selon la revendication 1 ou 2, **caractérisé en ce que** ledit émetteur (17) est en outre muni d'un élément émetteur (19) disposé à proximité du côté inférieur du gobelet trayeur (3).

4. Dispositif selon la revendication 3, **caractérisé en ce que** l'émetteur (17), l'accumulateur (18) et l'élément émetteur (19) sont encastrés dans le matériau dans lequel est réalisé le côté inférieur du gobelet trayeur (3).

5. Dispositif selon l'une quelconque des revendications précédentes, **caractérisé en ce que** le capteur est adapté pour superviser le processus de traite.

6. Dispositif selon l'une quelconque des revendications précédentes, **caractérisé en ce que** le capteur est adapté pour examiner la condition physique de l'animal.

7. Dispositif selon l'une quelconque des revendications précédentes, **caractérisé en ce que** l'émetteur (17) est constitué par un émetteur infrarouge.

8. Dispositif selon l'une quelconque des revendications 1 à 6, **caractérisé en ce que** l'émetteur (17) est constitué par un émetteur à ultrasons.

9. Dispositif selon l'une quelconque des revendications 1 à 6, **caractérisé en ce que** l'émetteur (17) est constitué par un émetteur radiographique.

10. Dispositif selon l'une quelconque des revendications 1 à 6, **caractérisé en ce que** l'émetteur (17) est constitué par un émetteur optique.

11. Dispositif selon l'une quelconque des revendications précédentes, **caractérisé en ce que** le gobelet trayeur (3) comporte une partie inférieure tronconique (10).

12. Dispositif selon l'une quelconque des revendications précédentes, **caractérisé en ce que** le récepteur (25) est disposé à proximité de l'émetteur (17).

13. Dispositif selon la revendication 12, **caractérisé en ce que** le récepteur (25) et/ou l'émetteur (17) est/sont disposé(s) dans ou sur l'élément porteur (2) du gobelet trayeur (3).

14. Dispositif selon l'une quelconque des revendications précédentes, **caractérisé en ce que**, à l'aide du capteur (12 ; 14 ; 15), est/sont mesuré(s) : la température du lait et/ou la conductivité du lait et/ou la numération cellulaire et/ou le nombre de germes du lait et/ou la présence ou l'absence du trayon (13) dans le gobelet trayeur (3) et/ou le niveau de vide dans le gobelet trayeur (3) et/ou la pression artérielle de l'animal et/ou le rythme cardiaque de l'animal et/ou la pression interne dans le trayon (13) et/ou les mouvements du revêtement (5) du gobelet trayeur (3).

15. Dispositif selon l'une quelconque des revendications précédentes, **caractérisé en ce qu'**un capteur d'inertie de masse (26) est disposé dans et/ou sur le gobelet trayeur (3).
